# EUROPÄISCHE PATENTSCHRIFT

(11) **EP 1 523 797 B1**
(45) Veröffentlichungstag und Bekanntmachung des Hinweises auf die Patenterteilung: **11.07.2018**
(21) Anmeldenummer: 03729974.0
(22) Anmeldetag: 05.05.2003
(51) Int. Cl.: H02K 15/00, H02K 1/00, H02K 5/14, H01R 39/38

(54) **ELEKTROMOTOR FÜR HANDWERKZEUGMASCHINE**
ELECTRIC MOTOR FOR HAND TOOLS
MOTEUR LECTRIQUE POUR MACHINE-OUTIL MANUELLE

(30) Priorität: 14.06.2002 DE 20209292 U
(43) Veröffentlichungstag der Anmeldung: 20.04.2005
(73) Patentinhaber: Scintilla AG, 4501 Solothurn (CH)
(72) Erfinder: BRANTSCHEN, Raymond, CH-3924 St. Nikolaus (CH); SCHALLER, Renato, CH-3924 St. Nikolaus (CH)
(86) Internationale Anmeldenummer: PCT/EP2003/004664
(87) Internationale Veröffentlichungsnummer: WO 2003/107517

(56) Entgegenhaltungen:
- JP-A- S5 720 146
- JP-A- 60 020 741
- US-A- 4 851 730
- US-A- 4 851 730
- US-A- 6 133 665
- US-B1- 6 394 191
- PATENT ABSTRACTS OF JAPAN vol. 006, no. 081 (E-107), 19. Mai 1982 (1982-05-19) & JP 57 020146 A (ARIGA TOKUSHICHI), 2. Februar 1982 (1982-02-02)
- PATENT ABSTRACTS OF JAPAN vol. 009, no. 136 (E-320), 12. Juni 1985 (1985-06-12) & JP 60 020741 A (MATSUSHITA DENKI SANGYO KK), 2. Februar 1985 (1985-02-02)

## Beschreibung

### Stand der Technik

Die vorliegende Erfindung geht aus von einem Elektromotor nach dem Oberbegriff des Anspruch 1.

Es sind Elektromotoren bekannt, deren Kohlebürsten ohne Demontage des Gehäuses, nur durch Öffnen von Servicedeckeln von außen zugänglich sind. Dabei ist jede Kohlebürste mit einer Rastkappe verbunden, die deckelartig mit einer schachtartigen Bürstenfassung verrastbar ist und die die Kohlebürste ins Innere der Bürstenfassung hineindrückt und dabei die Kohlebürste federvorgespannt mit dem Rotor bzw. mit dessen Kollektor kontaktiert.

Die Entnahme der Kohlebürste erfolgt durch Abheben der Rastkappe von der Bürstenfassung und deren gemeinsamen Entnahme durch die Serviceöffnung nach außen. Dabei ist das Lösen der Rastkappe von der Bürstenfassung und die Entnahme der Kohlebürste umständlich und zeitaufwendig.

Aus der US 6 133 665 A, der US 6 394 191 B1, der US 4 851 730 A sowie der JP 60 020741 A sind überdies Elektromotoren bekannt, bei denen die Rastkappe kraft- und/oder formschlüssig an der Bürstenfassung befestigbar ist und mindestens ein gesondertes Eingriffsmittel für ein Werkzeug zum Lösen der Rastkappe von der Bürstenfassung aufweist.

### Vorteile der Erfindung

Die vorliegende Erfindung mit den Merkmalen des Anspruchs 1 hat den Vorteil, dass die Kohlebürste noch schneller und sicherer von der Bürstenfassung abnehmbar und gegen eine neue auswechselbar ist. Dazu weist die Bürstenfassung einen mittigen Deckel zum Übergreifen der Stirnseite der Bürstenfassung auf, der auf gegenüberliegenden Seiten U-Schenkel trägt, wobei das Eingriffsmittel als eine Öffnung eines U-Schenkels zum Eingriff einer Schraubendreherklinge oder dergl. ausgebildet ist.

Dadurch, dass die Rastkappe als Blechprägeteil ausgestaltet ist, ist sie kostengünstig herstellbar und leicht.

Dadurch, dass die U-Schenkel mit Federzungen versehen sind, ist ein einfaches Haltemittel für die Verbindung der Rastkappe mit der Bürstenfassung geschaffen.

Dadurch, dass die Öffnung zum Eingriff der Schraubendreherklinge am abgewinkelten Bereich eines Schenkels angeordnet ist, ist sie sicher und bequem zugänglich für eine Schraubendreherklinge oder dergleichen.

### Zeichnung

Nachstehend ist die Erfindung an Hand eines Ausführungsbeispiels mit zugehörigen Zeichnungen erläutert.

Es zeigen
Fig. 1 eine räumliche Ansicht des Elektromotors mit Rastkappe und Bürstenfassung,
Fig. 2 eine räumliche Ansicht der Bürstenplatte des Elektromotors,
Fig. 3 die Ansicht gemäß Fig. 2 als Explosionszeichnung und
Fig. 4 die Bürstenplatte mit einem in die Rastkappe eingreifenden Schraubendreher.

### Ausführungsbeispiel

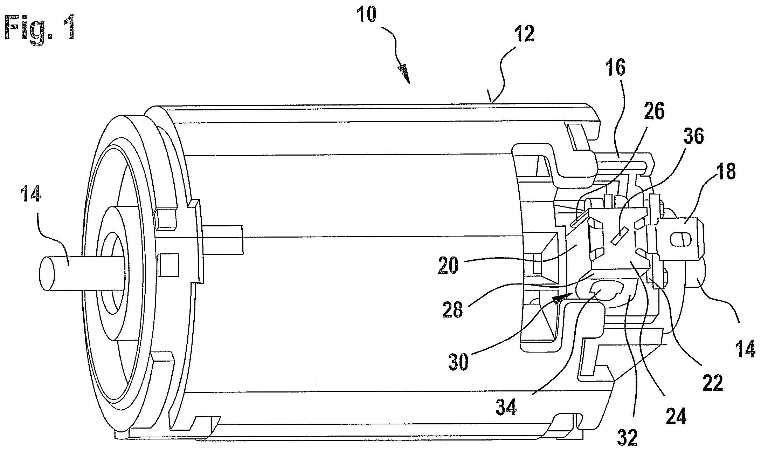

Fig. 1 zeigt einen Elektromotor 10 mit einer zylindermantelartigen, als Blechkapsel ausgestalteten Außenschale 12, die im Inneren einen nicht dargestellten Rotor trägt, dessen Motorwelle 14 auf den Stirnseiten des Motors 10 nach außen tritt. In Betrachtungsrichtung rechts trägt der Elektromotor 10 stirnseitig eine Bürstenplatte 16, die an die Außen Außenschale 12 angeflanscht ist. Diese Bürstenplatte 16 wird mittig vom anderen Ende der Motorwelle 14 durchtreten.

Aus der Bürstenplatte 16 treten auf zwei entgegengesetzten Seiten zwei Bürstenfassungen 20 radial nach außen, von denen nur die obere erkennbar ist. Diese tragen je eine axial nach außen weisende Kontaktzunge 18 zum Anschluss eines zu einer nicht dargestellten Stromquelle führenden nicht dargestellten Elektrokabels. Die Bürstenfassungen 20 sind außen durch je eine Rastkappe 22 verschlossen, die aus einem Deckel 24 mit zwei seitlichen Schenkeln 26, 28, besteht, die sich mittels Federzungen 44 seitlich an der Bürstenfassung 20 überrastend festhalten. Der eine Schenkel 28 trägt einen abgewinkelten Bereich 32 mit einer kreuzschlitzartigen Öffnung 34 als Montagemittel 30 zum Eingriff einer Klinge eines Schraubendrehers 46. Außerdem trägt die Rastkappe 22 auf ihrem Deckel einen Eingriffsschlitz 36 zum Eintritt eines Schlitz-Schraubendrehers. Dieser kann mittig aber auch an anderer Stelle der Rastkappe 22 angeordnet sein.

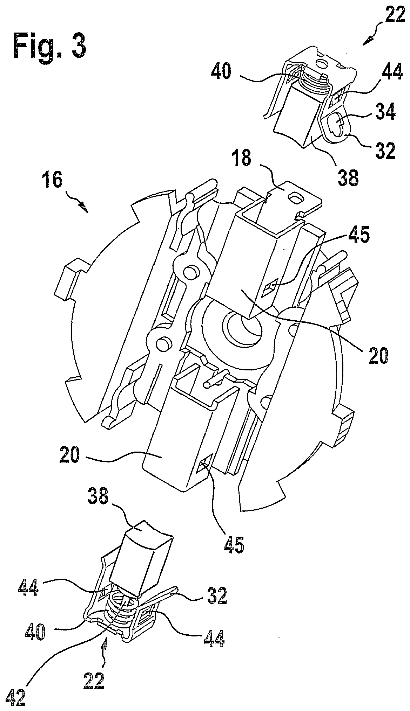

Unten am Deckel 24 hängt die Kohlebürste 38 an einer Kabellitze 42 (Fig. 3), wobei zwischen Deckel 24 und Kohlebürste eine vorgespannte Feder 40 sitzt. Diese drückt die Kohlebürste 38 in der Bürstenfassung 20 nach innen in Richtung des Rotors bzw. dessen Kollektors weg vom Deckel 24.

Die Schenkel 26, 28 tragen je eine flächig freigestanzte Federzunge 44, die jeweils nach innen zur Bürstenfassung 20 hin vorgespannt aus der Schenkelebene herausragt und die Rastkappe 22 unverlierbar an der Bürstenfassung 20 festhält.

Zum Entfernen der Kohlebürste 38 wird ein Kreuzschlitz-Schraubendreher 46 mit seiner Klingenspitze in die entsprechend profilierte Öffnung 34 der Rastkappe 22 geführt. Danach ist die Rastkappe 22 durch Drehen bzw. Schwenken des Schraubendrehers 46 vom Bürstenhalter 20 abziehbar, wobei die Kohlebürste 38 durch Vorspannung der Feder 40 (Fig. 3) selbsttätig folgt.

Wenn kein Kreuzschlitz-Schraubendreher 46 zur Hand ist, kann ein Flachschlitz-Schraubendreher in den Eingriffsschlitz 36 der Rastkappe 22 eingeführt werden und diese durch Drehen bzw. Aushebeln gemeinsam mit der Kohlebürste 38 entnommen werden.

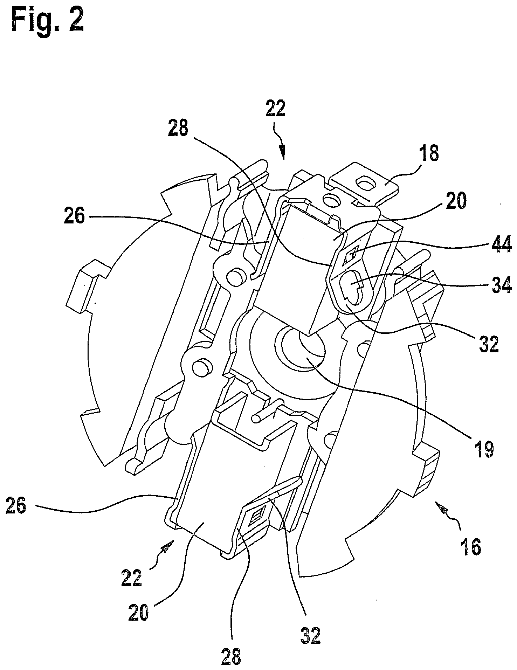

Fig. 2 zeigt die Bürstenplatte 16 als Einzelheit, wobei hier die zwei spiegelsymmetrischen Bürstenfassungen 20 mit den betriebsgemäß daran befestigten Rastkappen 22 sichtbar sind, die jeweils über die Kabelllitze 42 mit den nicht erkennbaren Kohlebürsten 38 elektrisch verbunden sind und diese in der Bürstenfassung 20 lagesicher halten.

Deutlich erkennbar ist der abgewinkelte Bereich 32 des jeweils einen Schenkels 28 der Rastkappe 22 mit der kreuzschlitzartigen Öffnung 34. Darüberhinaus ist mittig in der Bürstenplatte 16 ein Lagerbohrung 19 erkennbar, die zum Durchgriff der Motorwelle 14 im fertig montierten Motor 10 dient. Außerdem ist die Kontaktzunge 18 der Bürstenfassung 20 zum Anschluß eines Stromkabels deutlich sichtbar.

Fig. 3 zeigt Fig. 2 als Explosionsdarstellung, wobei die Kohlebürsten 38 in ihrer Zuordnung zur Rastkappe 22 erkennbar sind, insbesondere mit der zwischen Rastkappe 22 und Kohlebürste 38 entlang der Kabellitze 42 vorgespannten Feder 40. Weiter sind über die Fig. 2 hinausgehend Rastöffnungen 45 seitlich in den Bürstenfassungen 20 sichtbar, in die die Federzungen 44 der Rastkappen 22 bei betriebsgerechter Montage einrasten und die Rastkappen 22 unverlierbar an den Bürstenfassungen 20 festhalten.

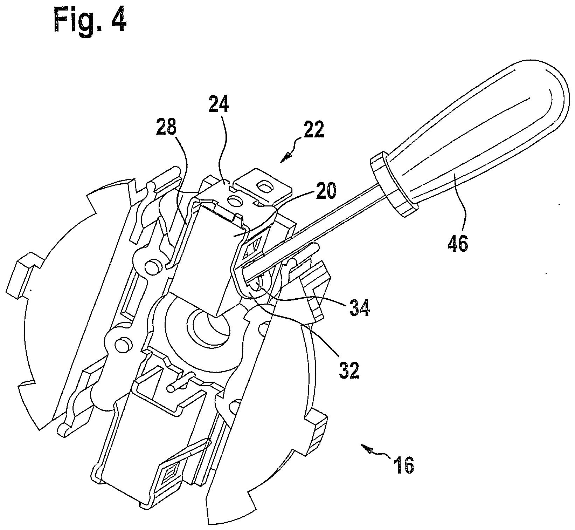

Fig. 4 zeigt über die Figuren 1 bis 3 hinausgehend die Anordnung des Schraubendrehers 46 in der Öffnung 34 des Schenkels 28 der Rastkappe 22. Durch Drehen bzw. Schwenken des Schraubendrehers 46 hebt sich der Schenkel 28 mit seiner Zunge 44 aus der Rastöffnung 45 und die Rastkappe 22 kann längs zur Bürstenfassung 20 entnommen werden, wobei ihr die Kohlebürste 38 gemeinsam mit der Feder 40 und der Kabellitze 42 folgt und gegen ein neue Kohlebürste 38 mit Feder 40, Kabellitze 42 und Kappe 20 ausgetauscht werden kann.

## Patentansprüche

1. Elektromotor (10) mit einem Rotor sowie mit auswechselbaren Kohlebürsten (38), die einenends mit einer Stromquelle verbindbar und anderenends mit dem Rotor elektrisch kontaktierbar sind, wobei die in je einer Bürstenfassung (20) längsverschiebbar gelagerten Kohlebürsten (38) durch je eine Rastkappe (22) axial, insbesondere federgestützt, sicherbar sind, und wobei die Rastkappe (22) kraft- und/oder formschlüssig an der Bürstenfassung (20) befestigbar ist, mindestens ein gesondertes Eingriffsmittel (34, 36) für ein Werkzeug (46) zum Lösen der Rastkappe (22) von der Bürstenfassung (20) aufweist, und einen mittigen Deckel (24) zum Übergreifen der Stirnseite der Bürstenfassung (20) aufweist, der auf gegenüberliegenden Seiten U-Schenkel (26, 28) trägt, **dadurch gekennzeichnet, dass** das Eingriffsmittel (34, 36) als eine Öffnung (34) eines U-Schenkels (26, 28) zum Eingriff einer Schraubendreherklinge oder dergl. ausgebildet ist.

2. Elektromotor (10) nach Anspruch 1, **dadurch gekennzeichnet, dass** die Rastkappe (22) als Blechprägeteil ausgestaltet ist.

3. Elektromotor (10) nach einem der vorhergehenden Ansprüche, **dadurch gekennzeichnet, dass** die U-Schenkel (26, 28) Federzungen (44) bilden, die sich an der Bürstenfassung (20) festhaltend abstützen.

4. Elektromotor (10) nach einem der vorhergehenden Ansprüche, **dadurch gekennzeichnet, dass** die Öffnung (34) an einem abgewinkelten Bereich (32) des U-Schenkels (26, 28) angeordnet ist.

5. Elektromotor (10) nach einem der vorhergehenden Ansprüche, **dadurch gekennzeichnet, dass** eine andere Öffnung (36) etwa mittig an der Rastkappe (22) angeordnet ist.

## Claims

1. Electric motor (10) comprising a rotor and also comprising replaceable carbon brushes (38) which can be connected to a power source at one end and can be electrically contacted by the rotor at the other end, wherein the carbon brushes (38) which are longitudinally displaceable mounted in a brush holder (20) in each case can be secured in an axial manner, in particular with spring assistance, by in each case one latching cap (22), and wherein the latching cap (22) can be fastened in a force-fitting and/or interlocking manner to the brush holder (20), has at least one separate engagement means (34, 36) for a tool (46) for detaching the latching cap (22) from the brush holder (20), and has a central cover (24) for engaging over the end side of the brush holder (20), which central cover is fitted with U-limbs (26, 28) on opposite sides, **characterized in that** the engagement means (34, 36) are in the form of an opening (34) of a U-limb (26, 28) for engagement of a screwdriver blade or the like.

2. Electric motor (10) according to Claim 1, **characterized in that** the latching cap (22) is configured as a sheet-metal pressed part.

3. Electric motor (10) according to either of the preceding claims, **characterized in that** the U-limbs (26, 28) form spring tongues (44) which are supported in a captive manner on the brush holder (20).

4. Electric motor (10) according to one of the preceding claims, **characterized in that** the opening (34) is arranged in an angled region (32) of the U-limb (26, 28).

5. Electric motor (10) according to one of the preceding claims, **characterized in that** another opening (36) is arranged approximately centrally in the latching cap (22).

## Revendications

1. Moteur électrique (10) comprenant un rotor ainsi que des balais en charbon (38) remplaçables qui, à une extrémité, peuvent être reliés à une source de courant et, à l'autre extrémité, peuvent être mis en contact électrique avec le rotor, les balais en charbon (38), montés coulissant longitudinalement respectivement dans une monture de balai (20), pouvant être bloqués dans le sens axial, notamment supportés par ressort, respectivement par un capuchon à cran d'arrêt (22), le capuchon à cran d'arrêt (22) pouvant être fixé à la monture de balai (20) par force et/ou complémentarité de formes, possédant au moins un moyen de mise en prise (34, 36) séparé pour un outil (46) servant à détacher le capuchon à cran d'arrêt (22) de la monture de balai (20), et possédant un couvercle central (24) destiné à chevaucher le côté frontal de la monture de balai (20), lequel supporte des branches en U (26, 28) sur les côtés opposés, **caractérisé en ce que** le moyen de mise en prise (34, 36) est réalisé sous la forme d'une ouverture (34) d'une branche en U (26, 28) servant à la prise d'une lame de tournevis ou similaire.

2. Moteur électrique (10) selon la revendication 1, **caractérisé en ce que** le capuchon à cran d'arrêt (22) est réalisé sous la forme d'une pièce estampée en tôle.

3. Moteur électrique (10) selon l'une des revendications précédentes, **caractérisé en ce que** les branches en U (26, 28) forment des languettes de ressort (44) qui s'appuient avec rétention sur la monture de balai (20).

4. Moteur électrique (10) selon l'une des revendications précédentes, **caractérisé en ce que** l'ouverture (34) est disposée sur une zone coudée (32) de la branche en U (26, 28).

5. Moteur électrique (10) selon l'une des revendications précédentes, **caractérisé en ce qu'**une autre ouverture (36) est disposée approximativement au centre sur le capuchon à cran d'arrêt (22).
